Europäisches Patentamt

European Patent Office

Office européen des brevets

(11) Veröffentlichungsnummer: **0 312 524 B1**

(12) **EUROPÄISCHE PATENTSCHRIFT**

(45) Veröffentlichungstag der Patentschrift: **16.12.92**

(51) Int. Cl.5: **G01S 17/10**

(21) Anmeldenummer: **87901010.6**

(22) Anmeldetag: **09.02.87**

(86) Internationale Anmeldenummer:
**PCT/CH87/00017**

(87) Internationale Veröffentlichungsnummer:
**WO 88/05922 (11.08.88 88/18)**

(54) **VERFAHREN UND VORRICHTUNG ZUR ENTFERNUNGSMESSUNG DURCH VERARBEITUNG OPTISCHER IMPULSSIGNALE.**

(43) Veröffentlichungstag der Anmeldung:
**26.04.89 Patentblatt 89/17**

(45) Bekanntmachung des Hinweises auf die Patenterteilung:
**16.12.92 Patentblatt 92/51**

(84) Benannte Vertragsstaaten:
**AT CH FR GB IT LI NL SE**

(56) Entgegenhaltungen:
**DE-A- 2 504 168**
**DE-A- 2 813 787**
**FR-A- 2 393 321**
**US-A- 3 510 662**

**OPTICAL AND OUANTUM ELECTRONICS, Band 7, Nr. 3, Mai 1975, Chapman and Hall Ltd, London, GB; C.L. FRUSH: "A new lidar signal processor using digital techniques to provide real-time display", Seiten 179-185**

**OPTICAL AND QUANTUM ELECTRONICS,**

**Band 7, Nr. 3, Mai 1975, Chapman and Hall Ltd, London, GB; E. E. UTHE et al.: "A digital real-time lidar data recording processing and display sytem", Seiten 121-129**

**IEEE TRANSACTIONS ON NUCLEAR SCIENCE, Band NS-19, Nr. 3, Juni 1972, 1972 Thirteenth Scintillation and Semiconductor Counter Symposium, Washington D.C., 1.-3. März 1972, IEEE, New York, US; S.K. POULTNEY: "Single photon detection and timing in the lunar laser ranging experiment", Seiten 12-17**

(73) Patentinhaber: **Leica Heerbrugg AG**

**CH-9435 Heerbrugg(CH)**

(72) Erfinder: **GAECHTER, Bernhard, F.**
**Kapfstrasse 4 b**
**CH-9436 Balgach(CH)**

EP 0 312 524 B1

## Beschreibung

Die Erfindung betrifft ein Verfahren zur Entfernungsmessung zwischen einem Sende-Empfänger für optische Impulssignale und einem Ziel, durch Aussenden von optischen Impulssignalen, Empfangen der vom Ziel reflektierten Signale, Umsetzen der empfangenen optischen Signale in digitale elektrische Signale und anschließende Signalverarbeitung zur Ableitung eines Meßkriteriums für die Entfernungsinformation aus einem Summensignal, das durch Summieren von N aufeinanderfolgenden reflektierten Signalen gebildet wird. Die Erfindung betrifft ferner eine Vorrichtung zur Durchführung dieses Verfahrens.

Es sind Distanzmessverfahren bekannt, welche nach dem RADAR-Prinzip gepulste elektomagnetische Signale als Hilfsmittel verwenden, um durch Messung des Signalverhaltens zwischen dem Ziel und den Sende-Empfänger bei Kenntnis gewisser Randbedingungen die Distanz zu bestimmen.

Höher empfindliche Distanzmessverfahren, welche im optischen Frequenzspektrum arbeiten, verwenden Festkörperlaser (z.B. YAG, Rubin oder dergl.) als Sender. Diese Laser werden optisch gepumpt, wobei die Distanz durch Ausmessung des Verhaltens eines einzelnen Laserimpulses mit entsprechend hoher Energie bestimmt wird. Der elektrische Wirkungsgrad eines optisch gepumpten Festkörperlasers ist wegen der zum Pumpen verwendeten Entladungslampen im allgemeinen sehr schlecht. Außerdem ist im praktischen Betrieb der häufig erforderliche Batteriewechsel nachteilig. Damit ein einzelner rückgestreuter Impuls genügend Energie aufweist, um überhaupt detektiert werden zu können, muß die Energie der einzelnen ausgesendeten Impulse sehr hoch sein. Impulse, deren Energie einen bestimmten Grenzwert überschreitet, gefährden jedoch die Augen, sofern nicht besondere Sicherheismaßnahmen getroffen werden. Halbleiterlaser, welche zwar höhere Pulsraten zulassen, z. B. 10 bis 100 kHz für GaAs, wurden wegen ihrer relativ geringen Spitzenausgangsleistung, die aus thermischen Gründen nicht überschritten werden darf, für Distanzmeßverfahren im freien Gelände, also mindestens über einige hundert Meter, bisher nicht in Betracht gezogen.

Aus Optical and Quantum Electronics, Band 7, Nr. 3, Mai 1975, Seiten 179-185 ist ein LIDAR bekannt, welches für Festkörperlaser gesteigerter Pulsfrequenz geeignet ist und mit Photomultipliern als Detektore arbeitet, wobei auf die Amplitudenmessung mit großem dynamischem Umfang Wert gelegt wird. Die empfangenen Signale werden verstärkt, mit 10 MHz Taktfrequenz digitalisiert, zwischengespeichert und nach Abschluß der Messungen in einem Summierspeicher addiert. Aus dem resultierendem Signal wird die Amplitude und die Entfernung abgeleitet.

Aus FR-A 2 393 321 ist ein Wolkenhöhenmesser bekannt, bei dem zur Rauschunterdrückung die Differenz zweier Signalintegrale aus zwei Zeitfenstern gebildet wird, wobei in einem Zeitfenster nur Rauschen aufgenommen wird. Es werden Schieberegister und Addierer verwendet.

Es ist Aufgabe der vorliegenden Erfindung , ein Verfahren und eine Vorrichtung zur Entfernungsmessung der eingangs genannten Art dahingehend zu verbessern, daß einerseits höhere Pulsraten als bisher für die Distanzmessung eingesetzt werden können und daß andererseits die Signalstärke der empfangenen Signale stark genug ist, um eine einwandfreie Signalverarbeitung und damit die Distanzmessung über den angestrebten Entfernungsbereich überhaupt mit genügender Zuverlässigkeit zu ermöglichen.

Diese Aufgabe wird erfindungsgemäß durch die in den Patentansprüchen 1 und 4 definierten Merkmale gelöst.

Der Vorteil dieser Lösung besteht darin, daß sich entgegen ursprünglichen Erwartungen die relativ preisgünstigen und schaltungstechnisch gut zu beherrschenden Laserdioden trotz ihrer geringen Spitzenausgangsleistungen für die Distanzmessung über mindestens einige hundert Meter einsetzen lassen, wobei sich sogar überraschend hohe Verbesserungen in der Empfindlichkeit der Messmethode um mindestens eine Zehnerpotenz, typischerweise jedoch um mehrere Zehnerpotenzen, z.B. um den Faktor 100, erreichen lassen. Ausserdem können nach diesem Verfahren arbeitende Geräte besonders klein und leicht aufgebaut werden. Auch die Energieversorgung und die Ansteuerung der Laserdioden sowie die nachfolgende Signalverarbeitung lassen sich besonders einfach unter weitgehender Verwendung von Standardbauteilen realisieren. Von Vorteil ist ferner der höhere elektrische Wirkungsgrad eines Halbleiterlasers gegenüber den bisher verwendeten Festkörperlasern, sowie die Möglichkeit, mit höheren Pulsraten zu arbeiten.

Trotz kleinerer Spitzenleistung sind mit der erfindungsgemässen Massnahme grössere Reichweiten bei augensicherem Messen möglich als bei Verwendung von Einzelimpulslasern. Wegen der starken Bündelung des Laserstrahls lassen sich nach dieser Methode Zieldistanzen sogar reflektorlos, d.h. ohne vorheriges Anbringen von reflektierenden Elementen am Ziel, mit ausserordentlich hoher Genauigkeit ausmessen.

Während bisher Abtast- oder Sampling-Methoden in Signalverarbeitungsverfahren zur Verbesserung der Auflösung der empfangenen Signale, also zu deren besserer direkter Erkennung eingesetzt wurden, zielt das vorliegende Verfahren bzw. die vorliegende Vorrichtung auf den Einsatz der Sampling-Methode zur Verbesserung der Empfindlichkeit des Empfängers und damit zur Verbesserung des Nutz-/Störsignal-Verhältnisses S/N.

Die Erfindung wird im folgenden anhand bevorzugter Ausführungsbeispiele mit Hilfe der Zeichnungen näher erläutert.

Es zeigen:

Fig. 1    das Blockschaltbild eines bevorzugten Ausführungsbeispiels, zur Erläuterung des Verfahrens,

Fig. 2    ein Zeitdiagramm zur Erläuterung des Verfahrens und

Fig. 3    das Blockschaltbild eines vereinfachten Ausführungsbeispiels.

Das Prinzip des erfindungsgemässen Verfahrens besteht im wesentlichen in der Anwendung der Erkenntnis, dass die Empfindlichkeit der Messmethode durch die Verwendung von N Impulsen nach den Regeln der Informationstheorie um den Faktor $\sqrt{N}$ verbessert werden kann. Es hat sich erwiesen, dass durch eine optimale Ausnutzung hoher Pulsraten nach solchen informationstheoretischen Regeln nicht nur die Nachteile der relativ kleinen zulässigen Spitzenausgangsleistungen für Laserdioden überwunden werden können, sondern die Messempfindlichkeit gegenüber herkömmlichen Methoden ganz wesentlich verbessert werden kann, z.B. um den Faktor 100.

Durch Anwendung der Abtast- oder Sampling-Methode auf die empfangenen Impulssignal-Gruppen lässt sich ein äusserst präzises Entscheidungskriterium für das Wiedereintreffen der vom Ziel reflektierten Impulse und damit für die Laufzeit der Impulse zwischen dem Zeitpunkt des Aussendens und des Wiedereintreffens herleiten. Trotz geringer Sendeenergie lassen sich bei einem sehr guten S/N-Verhältnis relativ grosse Entfernungen mit hoher Präzision ausmessen.

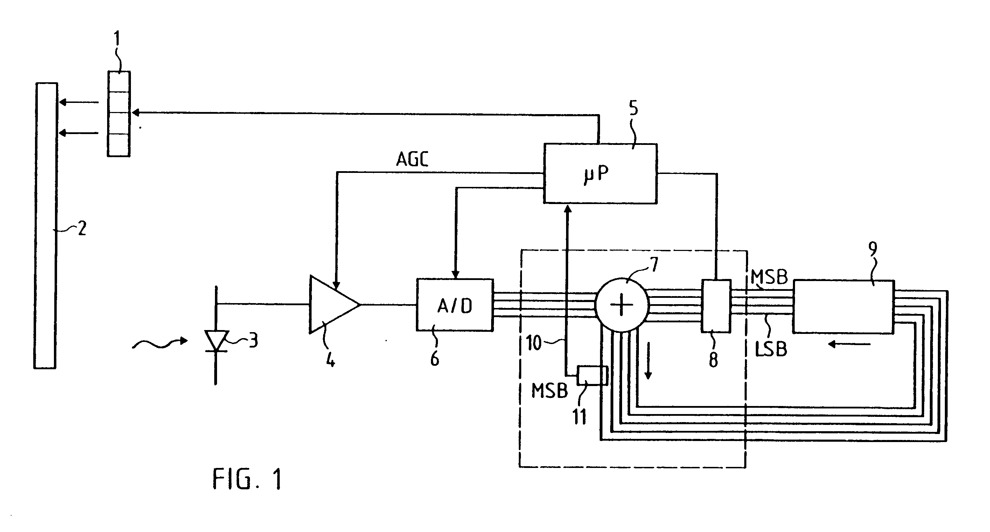

Wie Figur 1 schematisch zeigt, wird die von einer Laserdioden-Anordnung 1 ausgesendete Pulsfolge von einem Ziel 2 reflektiert und anschliessend von einer vorzugsweise im Sende/Empfänger angeordneten lichtempfindlichen Zelle, z.B. von einer Avalanche-Diode 3 empfangen. Die gewählte Pulsfolgefrequenz liegt beispielsweise im Bereich zwischen 10 und 100 kHz. Die Pulsabgabe wird von einem Mikroprozessor 5 gesteuert, vorzugsweise programmgesteuert.

Die von der Avalanche-Diode 3 erfassten Signale werden in einem Verstärker 4 auf ein für die folgende Verarbeitung ausreichendes Mass verstärkt. In einem nachfolgenden Analog/Digitalwandler 6 werden die empfangenen Pulse mit einer vom Mikroprozessor 5 vorgegebenen Abtastfrequenz digitalisiert. Der Takt der Abtastoperation beträgt im Beispiel 100 ns (Nanosekunden). Die digitalisierten Daten werden beispielsweise als 4- oder 6-Bit Parallel-Signale einem Parallel-Addierer 7 übergeben und dort unmittelbar im Takt der vorgenannten Abtast-Operation zum entsprechenden Wert bei jedem einzelnen Puls innerhalb eines Abtastintervalls aufaddiert. Dieses Aufaddieren der jeweils auf entsprechende Abtastzeitpunkte bezogenen Abtastwerte der periodisch ausgesendeten Impulsfolgen führt zu einer Ueberhöhung der ausgewerteten Empfangssignale und damit zu der erwähnten Steigerung der Empfindlichkeit für die Gesamtanordnung.

Zur Erzielung dieser Wirkung ist im gezeigten Beispiel eine vom Analog-/Digital-Wandler 6 kommende 4-Bit-Leitung als erster Summanden-Eingang dem Parallel-Addierer 7 zugeführt. Der zweite Summanden-Eingang des Parallel-Addierers 7 ist als 5-Bit-Eingang ausgelegt. Auch der Ausgang des Addierers weist eine 5-Bit-Leitung auf. Diejenige der parallel geführten Leitungen, welche der niedrigsten Stelle des parallel übertragenen Signals entspricht, ist mit LSB bezeichnet. Die der höchsten Stelle zugeordnete Leitung ist MSB benannt.

Zur Feststellung eines auf der Leitung MSB am Ausgang des Parallel-Addierers 7 auftretenden Bit-Signals ist ein Sensor 11 vorgesehen, welcher über eine MSB-Indikator-Leitung 10 mit einem Eingang des Mikroprozessors 5 verbunden ist. Vom Mikroprozessor 5 wird programmgesteuert festgestellt, ob ein auf der Leitung MSB auftretendes Bit während eines vollständigen Abtastzyklus zwischen zwei von der Laserdioden-Anordnung 1 ausgesendeten Impulsen vorhanden ist.

Der Ausgang des Parallel-Addierers 7 ist mit dem Eingang eines Schieberegisters 9 verbunden. Im Schieberegister 9 findet eine fortlaufende Zwischenspeicherung der vom Parallel-Addierer 7 gelieferten Werte für einen Abtast-Zyklus statt.

Vorzugsweise ist am Ausgang des Schieberegisters 9 über eine 4-Bit-Parallel-Leitung ein vom Mikroprozessor 5 gesteuerter Umschalter 8 vorgesehen, welcher ausgangsseitig über eine 5-Bit-Parallel-Leitung an den zweiten Summanden-Eingang des Parallel-Addierers 7 angeschlossen ist. Verglichen mit seinem Eingang weist also der Umschalter 8 an seinem zum Addierer führenden Ausgang eine zusätzliche Bit-Leitung auf.

In der Verbindung zwischen dem Schieberegister 9 und dem Umschalter 8 sind gemäss Fig. 1 die Leitungen für die niedrigste und die höchste Stelle wiederum mit LSB bzw. mit MSB bezeichnet. Umgeschaltet werden die Ausgangs-Bit-Leitungen des Umschalters 8 nach einem im folgenden beschriebenen, vom Mikroprozessor 5 gelieferten Kriterium jeweils um eine Bit-Position nach oben bzw. nach unten, wodurch die Zuordnung von eingehenden und ausgehenden Bitleitungen jeweils um eine Stelle verschoben wird.

Wird durch den Mikroprozessor 5 auf der MSB-Indikator-Leitung 10 ein Ueberlauf-Signal vom Parallel-Addierer 7 festgestellt, und bleibt dies über eine vollständige Abtastperiode erhalten, so wird vom Mikroprozessor 5 ein Umschaltsignal an den Umschalter 8 gegeben. Daraufhin schaltet dieser alle seine Eingangsleitungen jeweils auf eine um eine Stelle tiefere Ausgangsleitung um und bleibt während der gesamten nächsten Abtastperiode in dieser Stellung. Dadurch wird während dieser Zeit das bisherige MSB nun als zweithöchstes Bit dem Parallel-Addierer 7 zugeführt, das zweithöchste als dritthöchstes usw. und die Information der niedrigsten Stelle während dieser Zeit nicht berücksichtigt. Alle während dieser Abtastperiode ankommenden Bits werden durch diese Massnahme also um eine Stelle nach unten verschoben.

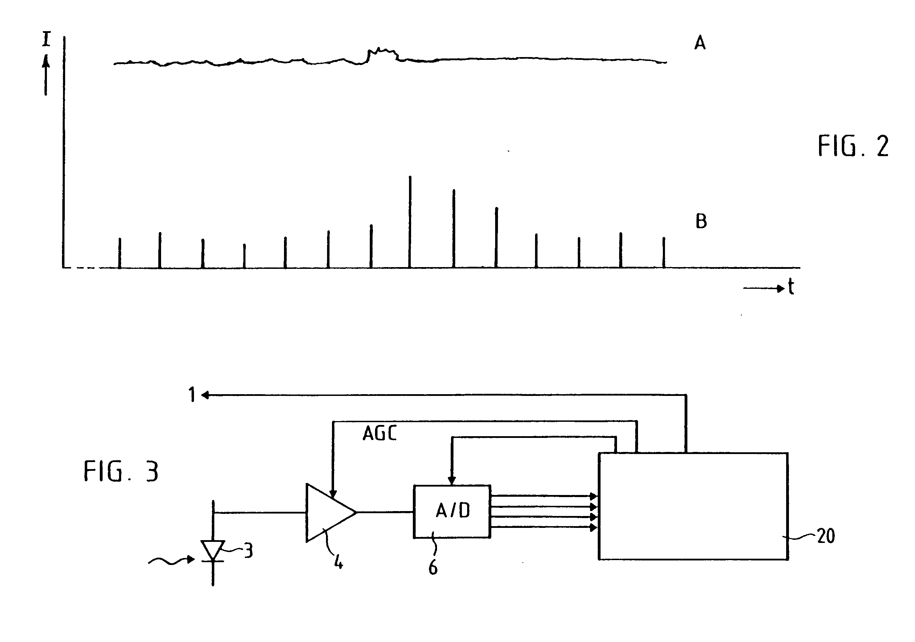

In Fig. 2 ist schematisch die Wirkung der beschriebenen Signalverarbeitung auf die empfangenen Pulssignale I dargestellt. Während der Signalzug A den tatsächlichen Verlauf der empfangenen Signalfolge zeigt, ist in Zeile B das Ergebnis der Signalverarbeitung mit den deutlich überhöhten Abtastimpulsen zu erkennnen. Ein solches Signal erlaubt die Zielerkennung und damit die sichere Distanzmessung mit einer etwa 100-fach besseren Empfindlichkeit bei Verwendung von 10'000 Impulsen, gegenüber einer bekannten Methode, welche eine Schwellenwert-Detektion innerhalb eines vorgegebenen Impulsfensters anwendet.

Durch die gewählte vollständig parallele Signalverarbeitung ergibt sich eine sehr hohe Verarbeitungsgeschwindigkeit für die von der Avalanche-Diode empfangenen Impulse. Entsprechend hoch fällt die Auflösung bzw. die Empfindlichkeit der Einrichtung selbst für die relativ schwachen, über eine grössere Entfernung hinweg empfangenen Pulssignale der Laserdioden aus.

In Abwandlung des zuvor beschriebenen Ausführungsbeispiels kann der in Fig. 1 als diskretes Bauteil dargestellte Parallel-Addierer 7 im Mikroprozessor 5 selbst integriert sein. Bei Verwendung eines entsprechend schnellen Mikroprozessors 5 ist es sogar möglich, auf die Verwendung eines diskreten Schieberegisters 9 zu verzichten. Dessen Funktion wird dann vom Prozessor selbst übernommen.

Figur 3 zeigt in einer vereinfachten Ausführung ein solches Beispiel, bei welchem ein Mikroprozessor 20 mit darin integriertem Parallel-Addierer zur direkten Signalverarbeitung vorgesehen ist. Zu diesem Zweck lassen sich vorzugsweise sehr schnelle Signalprozessoren einsetzen, deren Arbeitsfrequenz im Nanosekundenbereich liegt. Dabei werden die für das erste Beispiel nach Fig. 1 beschriebenen Funktionen durch entsprechende Programmierung des Prozessors 20 realisiert. Da das Prinzip der Verarbeitung bereits beschrieben wurde, werden Einzelheiten eines entsprechenden Programms hier nicht näher erläutert. Wie im ersten Ausführungsbeispiel nach Fig. 1 kann auch in diesem Fall vom Mikroprozessor 20 ein Verstärkungsregelungs-Signal AGC für den Verstärker 4 abgeleitet werden.

Ausser den erwähnten Beispielen sind auch andere schaltungsmässige oder durch Programmierung realisierte Lösungen möglich, welche von den gleichen, zuvor beschriebenen Verfahrensmerkmalen Gebrauch machen, um aus den relativ schwachen Empfangssignalen ein brauchbares Kriterium zur Entfernungsbestimmung zu gewinnen.

**Patentansprüche**

1. Verfahren zur Entfernungsmessung zwischen einem Sende-Empfänger für optische Impulssignale und einem Ziel, durch Aussenden von optischen Impulssignalen, Empfangen der vom Ziel reflektierten Signale, Umsetzen der empfangenen optischen Signale in digitale elektrische Signale und anschließende Signalverarbeitung zur Ableitung eines Meßkriteriums für die Entfernungsinformation aus einem Summensignal, das durch Summieren von N aufeinanderfolgenden reflektierten Signalen gebildet wird, **dadurch gekennzeichnet,**
   a) daß als Sender ein Halbleiterlaser verwendet wird, der Impulse mit einer Pulsfolgefrequenz im Bereich zwischen ca. 10 kHz und ca. 150 kHz auf das Ziel richtet,
   b) daß die vom Ziel reflektierte und empfangene Signalfolge mit einer von der Sende-Pulsfolgefrequenz abhängigen Abtastfrequenz abgetastet und digitalisiert wird, wobei das Abtastintervall bei jeder Pulsaussendung neu gestartet wird,
   c) daß die erhaltenen digitalisierten Abtastwerte innerhalb eines Abtastintervalls im Takt der Abtastfrequenz in einen Parallel-Addierer eingelesen und während des ersten Abtastintervalls gespeichert werden,
   d) daß die Abtastwerte des zweiten Abtastintervalls im Takt der Abtastfrequenz fortlaufend zu den bereits vorhandenen entsprechenden Abtastwerten aufaddiert werden, wobei zu jedem Abtastzeitpunkt statt des jeweils vorherigen Abtastwertes der jeweils erhaltene Summenwert abgespeichert wird,
   e) daß die Abtastwerte jedes weiteren Abtastintervalls im Takt der Abtastfrequenz fortlaufend zu dem bereits vorhandenen entsprechenden Summenwert aufaddiert werden, wobei der zu jedem Abtastzeitpunkt des Abtastintervalls neu erhaltene Summenwert statt des vorhergehenden Summenwertes abgespeichert wird und
   f) daß aus dem resultierenden Summensignal nach Aufaddierung von jeweils N Abtastwerten pro Abtastzeitpunkt die Entfernungsinformation abgeleitet wird.

2. Verfahren nach Anspruch 1, **dadurch gekennzeichnet,** daß die Abtastung der empfangenen Signalfolge mit einer Abtastfrequenz mit einem Takt im Nanosekundenbereich vorgenommen wird.

3. Verfahren nach Anspruch 2, **dadurch gekennzeichnet,** daß die Abtastung der empfangenen Signale mit einer Abtastfrequenz mit einem Takt von ca. 100 Nanosekunden vorgenommen wird.

4. Vorrichtung zur Durchführung des Verfahrens nach Anspruch 1 mit einem auf ein Ziel ausgerichteten optischen Impulssender, einem fotoelektrischen Empfänger für die vom Ziel reflektierten Signale und einer Signalverarbeitungsschaltung zur Ableitung eines Meßkriteriums für die Entfernungsinformation aus einem Summensignal, das durch Summieren von N aufeinanderfolgenden reflektierten Signalen gebildet wird, **dadurch gekennzeichnet, daß**
a) als optischer Impulssender ein Halbleiterlaser (1) vorgesehen ist,
b) dem fotoelektrischen Empfänger (3) ein Analog/Digital-Wandler (6) nachgeordnet ist, dessen Abtastoperation von einem Prozessor (5) in Abhängigkeit von der Pulsfolgefrequenz des Sendesignals steuerbar ist, und
c) dem Analog/Digital-Wandler (6) über eine Parallel-Leitung ein Parallel-Addierer (7) mit einem ersten und einem zweiten Summanden-Eingang und einem Ausgang derart nachgeschaltet ist, daß sein Ausgang über einen Zwischenspeicher mit dem zweiten Summanden-Eingang verbunden ist, wobei die vom Analog/Digital-Wandler (6) während eines ersten Abtastintervalls auf der Parallel-Leitung an den ersten Summanden-Eingang gelieferten Abtastwerte über den Ausgang in den Zwischenspeicher geleitet und von diesem taktgleich zu den während des nachfolgenden Abtastintervalls vom Analog/Digital-Wandler (6) an den ersten Summanden-Eingang gelieferten Abtastwerten an den zweiten Summanden-Eingang des Parallel-Addierers (7) abgegeben werden, so daß über den Ausgang des Parallel-Addierers (7) das jeweils resultierende Summensignal aus dem aktuellen und dem vorhergehend aufaddierten Abtastwert in den Zwischenspeicher geleitet wird und als Meßkriterium für die Entferungsinformation zur Verfügung steht.

5. Vorrichtung nach Anspruch 4, **dadurch gekennzeichnet,** daß als Zwischenspeicher ein Schieberegister (9) vorgesehen ist.

6. Vorrichtung nach Anspruch 5, **dadurch gekennzeichnet,** daß in der Ausgangsleitung des Parallel-Addierers (7) ein Sensor (11) zur Meldung eines Überlauf-Bits (MSB) an den Prozessor (5) vorgesehen ist und daß in der parallelen Verbindung zwischen dem Schieberegister (9) und dem Eingang für den zweiten Summanden am Parallel-Addierer (7) ein vom Prozessor (5) gesteuerter Umschalter (8) vorgesehen ist, welcher bei Meldung eines Überlauf-Bits (MSB) durch den Sensor (11) die parallelen Signalleitungen vom Schieberegister an den Parallel-Addierer (7) je um eine Stelle nach unten versetzt.

7. Vorrichtung nach Anspruch 4, **dadurch gekennzeichnet,** daß als Prozessor ein im Nanosekundenbereich arbeitender Mikroprozessor (20) vorgesehen ist, in welchem die Funktion des Parallel-Addierers (7) mit Zwischenspeicherung enthalten ist.

**Claims**

1. Method for the measurement of the distance between a target and a transmitter-receiver for optical pulse signals by the emission of optical pulse signals, reception of the signals reflected by the target, conversion of the received optical signals into digital electrical signals and subsequent signal processing for the derivation of a measurement criterion for the distance information from a sum signal which is formed by summation of N successive reflected signals, characterised thereby,
a) that a semiconductor laser, which directs pulses at a pulse repetition frequency in the range between about 10 kilohertz and about 150 kilohertz onto the target, is used as transmitter,
b) that the received signal sequence reflected by the target is scanned and digitalised at a scanning frequency dependent on the transmitted pulse repetition frequency, for which the scanning interval is started anew for each pulse emission,
c) that the obtained digitalised scanning values within a scanning interval are read into a parallel adder at the rate of the scanning frequency and stored during the first scanning interval,
d) that the scanning values of the second scanning interval are added continuously to the already present corresponding scanning values at the rate of the scanning frequency, wherein the respectively obtained sum value is stored in place of the respective previous scanning values at each scanning instant,

e) that the scanning values of each further scanning interval are added continuously to the already present corresponding scanning values at the rate of the scanning frequency, wherein the sum value newly obtained at each scanning instant of the scanning interval is stored in place of the preceding sum value and

f) that the distance information is derived from the resultant sum signal after adding on N scanning values for each scanning instant.

2. Method according to claim 1, characterised thereby, that the scanning of the received signal sequence is undertaken at a scanning frequency with a rate in the nanosecond range.

3. Method according to claim 2, characterised thereby, that the scanning of the received signals is undertaken at a scanning frequency with a rate of about 100 nanoseconds.

4. Device for the performance of the method according to claim 1 with an optical pulse transmitter directed towards the target, a photoelectric receiver for the signals reflected by the target and a signal-processing circuit for the derivation of a measurement criterion for the distance information from a sum signal which is formed by summation of N successive reflected signals , characterised thereby, that

a) a semiconductor laser (1) is provided as optical pulse transmitter,

b) an analog-to-digital converter (6), the scanning operation of which is controllable by a processor (5) in dependence on the pulse repetition frequency of the transmitted signal, is connected behind the photo-electric receiver (3) and

c) a parallel adder (7) with a first and a second sum term input and an output is connected by way of a parallel line behind the analog-to-digital converter (6) in such a manner that its output is connected by way of an intermediate storage device with the second sum term input, wherein the scanning values delivered to the first sum term input by the analog-to-digital converter (6) on the parallel line during a first scanning interval are conducted by way of the output into the intermediate storage device and delivered by this to the second sum term input of the parallel adder (7) at the same rate as the scanning values delivered to the first sum term input by the analog-to-digital converter (6) during the following scanning interval so that the respectively resultant sum signal from the actual and the previously added-on scanning value is conducted by way of the output of the parallel adder (7) into the intermediate storage device and stands at disposal as measurement criterion for the distance information.

5. Device according to claim 4, characterised thereby, that a shift register (9) is provided as intermediate storage device.

6. Device according to claim 5, characterised thereby, that a sensor (11) for reporting an overflow bit (MSB) to the processor (5) is provided in the output line of the parallel adder (7) and that a change-over switch (8), which is controlled by the processor (5) and on a report of an overflow bit (MSB) by the sensor (11) displaces the parallel signal lines from the shift register to the parallel adder (7) each downwardly by one place, is provided in the parallel connection between the shift register (9) and the second sum term input at the parallel adder (7).

7. Device according to claim 4, characterised thereby, that a microprocessor (20), which operates in the nanosecond range and in which the function of the parallel adder (7) with intermediate storage is contained,is provided as processor.

**Revendications**

1. Procédé pour mesurer la distance entre un émetteur-récepteur de signaux optiques à impulsions et une cible, par l'émission de signaux optiques à impulsions, la réception de signaux réfléchis par la cible, la transformation des signaux optiques reçus en des signaux électriques numériques, suivies du traitement des signaux en vue de l'obtention d'un critère de mesure de l'information de distance à partir d'un signal somme formé en additionnant les n signaux réfléchis successifs, caractérisé

a) en ce qu'on utilise comme émetteur un laser à semi-conducteur qui dirige les impulsions avec une fréquence de train d'impulsions dans une plage comprise entre environ 10 kHz et environ 150 kHz sur la cible,

b) en ce que la séquence des signaux reçus et réfléchis par la cible est échantillonnée par une fréquence d'échantillonage dépendant de la fréquence du train d'impulsions d'émission et est numérisée, en faisant débuter nouvellement l'intervalle d'échantillonage à chaque émission d'impulsion,

c) en ce que les valeurs d'échantillonage numérisées obtenues sont introduites à l'intérieur d'un intervalle d'échantillonage au rythme de la fréquence d'échantillonage dans un additionneur parallèle et sont stockées pendant le premier intervalle d'échantillonage,

d) en ce que les valeurs d'échantillonage du deuxième intervalle d'échantillonage sont additionnées au rythme de la fréquence d'échantillonage de façon continue aux valeurs d'échantillonage correspondantes déjà existantes, et à chaque instant d'échantillonage on stocke à la place de la valeur d'échantillonage respective antérieure la valeur somme respective obtenue,

e) en ce que les valeurs d'échantillonage de chaque intervalle d'échantillonage ultérieur sont additionnées au rythme de la fréquence d'échantillonage de façon continue à la valeur somme correspondante déjà existante, la valeur somme nouvellement obtenue à chaque instant d'échantillonage de l'intervalle d'échantillonage étant stockée à la place de la valeur somme précédente et

f) en ce qu'on obtient à partir du signal somme résultant, après addition des $n^{iemes}$ valeurs de palpage, respectivement, par instant d'échantillonage, l'information de distance.

2. Procédé selon la revendication 1, caractérisé en ce que l'échantillonage de la séquence de signaux reçus est effectuée avec une fréquence d'échantillonage avec un rythme dans le domaine des nanosecondes.

3. Procédé selon la revendication 2, caractérisé en ce que l'échantillonage des signaux reçus est effectué à une fréquence d'échantillonage d'un rythme de 100 nanosecondes environ.

4. Dispositif pour la mise en oeuvre du procédé selon la revendication 1, comprenant un émetteur optique d'impulsions dirigé vers la cible, un récepteur photo-électrique des signaux réfléchis par la cible et un circuit de traitement des signaux en vue de l'obtention d'un critère de mesure de l'information relative à la distance à partir d'un signal somme formé par addition des $n^{iemes}$ signaux réfléchis successifs, caractérisé en ce

a) qu'on prévoit comme émetteur optique d'impulsions un laser à semi-conducteur (1),

b) qu'on place à la suite du récepteur photo-électrique (3) un convertisseur analogique/numérique (6) dont l'opération d'échantillonage peut être commandée par un processeur (5) en fonction de la fréquence du train d'impulsion du signal émetteur, et

c) en ce qu'un additionneur parallèle (7) comprenant une première et une deuxième entrée opérandes d'une somme et une sortie est placé à la suite du convertisseur analogique/numérique (6) par l'intermédiaire d'un conducteur parallèle de façon que la sortie de celui-ci soit reliée par une mémoire temporaire à la deuxième entrée d'opérande d'une somme, les valeurs d'échantillonage fournies par le convertisseur analogique/numérique (6) pendant un premier intervalle d'échantillonage sur le conducteur parallèle à la première entrée d'opérande étant transmises par la sortie dans la mémoire temporaire et sont fournies par celle-ci, à rythme égal, aux valeurs d'échantillonage fournies pendant l'intervalle d'échantillonage suivant par le convertisseur analogique/numérique (6) à la première entrée d'opérande d'une somme, à la deuxième entrée d'opérande d'une somme de l'additionneur parallèle (7), de façon à obtenir par la sortie de l'additionneur parallèle (7) le signal somme résultant à chaque fois à partir de la valeur d'échantillonage actuelle et additionnée au préalable dans la mémoire temporaire et qui est disponible comme mesure de critère pour l'information de distance.

5. Dispositif selon la revendication 4, caractérisé en ce qu'on prévoit comme mémoire temporaire un registre à décalage (9).

6. Dispositif selon la revendication 5, caractérisé en ce qu'on prévoit dans le conducteur de sortie de l'additionneur parallèle (7) un capteur (11) pour signaler un chiffre binaire de dépassement (MSB) au processeur (5), et en ce qu'on prévoit dans la liaison parallèle entre le registre à décalage (9) et l'entrée de la deuxième opérande d'une somme sur l'additionneur parallèle (7) un commutateur (8) commandé par le processeur (5) qui lors de la signalisation d'un chiffre binaire de dépassement (MBS) par le capteur (11) décale vers le bas d'un emplacement les conducteurs parallèles de signalisation du registre à décalage à l'additionneur parallèle (7).

7. Dispositif selon la revendication 4, caractérisé en ce qu'on prévoit comme processeur un micro-processeur (20) travaillant dans le domaine des nanosecondes dans lequel est contenue la fonction de l'additionneur parallèle (7) avec la mémorisation temporaire.

FIG. 1

EP 0 312 524 B1

I

A

FIG. 2

B

t

FIG. 3

AGC

A/D

1

3

4

6

20